# EUROPÄISCHE PATENTANMELDUNG

(11) **EP 4 707 632 A1**
(43) Veröffentlichungstag der Anmeldung: **11.03.2026**
(21) Anmeldenummer: 24199258.5
(22) Anmeldetag: 09.09.2024
(51) Int. Cl.: F16D 33/06, F16H 47/08, F16H 61/64, F16H 41/22, F16H 61/44, F16H 61/444

(54) **HYDRODYNAMISCHES GETRIEBE FÜR EIN FAHRZEUG UN VERFAHREN ZUM BETREIBEN DESSELBEN**

(71) Anmelder: FNF Innovation Sh.P.K., 60000 Gjilan, Kosovo (AL)
(72) Erfinder: FEHMI, Mustafa, Gjilan, Kosovo (AL)
(74) Vertreter: Kador & Partner Part mbB

(57) **Zusammenfassung**

Die vorliegende Erfindung betrifft ein hydrodynamisches Getriebe für ein Fahrzeug, insbesondere für ein Motorrad, ein Verfahren zum Betreiben des hydrodynamischen Getriebes, eine Verwendung des hydrodynamischen Getriebes in einem Antrieb eines Fahrzeug und ein Fahrzeug. Das hydrodynamische Getriebe umfasst eine Antriebswelle (14), einen Flüssigkeitsbehälter (10) zur Speicherung von Hydraulikflüssigkeit, eine Vielzahl von Turbinen (2, 2a, 25, 26, 18), die auf einer Abtriebswelle (39) angeordnet sind und in ihrem Eintrittskanal (34) jeweils ein Einlassventil (3) aufweisen, das dazu eingerichtet ist, Hydraulikflüssigkeit in die Turbine (2, 2a, 25, 26, 18) zu leiten, um diese anzutreiben, eine Pumpe (13), die mit der Antriebswelle (14) verbunden und dazu eingerichtet ist, Hydraulikflüssigkeit aus dem Flüssigkeitsbehälter (10) mit einem bestimmten Druck zu den Einlassventilen (3) der Vielzahl von Turbinen (2, 2a, 25, 26, 18) zu fördern, und eine Rücklaufleitung (50), die einen Austrittskanal (31) der Vielzahl von Turbinen (2, 2a, 25, 26, 18) mit dem Flüssigkeitsbehälter (10) verbindet.

## Beschreibung

Die vorliegende Erfindung betrifft ein hydrodynamisches Getriebe für ein Fahrzeug, insbesondere für ein Motorrad.

Im Stand der Technik bekannt sind Automatikgetriebe, die einen hydrodynamischen Drehmomentwandler aufweisen, der üblicherweise zwischen Motor und Getriebe eines Fahrzeugs angeordnet ist.

Beispielsweise zeigt EP 2 146 115 A1 einen hydrodynamischen Drehmomentwandler, umfassend ein mit Fluid gefülltes Gehäuse, ein Pumpenrad, das an dem Gehäuse angebracht ist, ein dem Pumpenrad gegenüberliegendes Turbinenrad, das in einem Gehäuseinnenraum des Gehäuses angebracht ist, und ein Leitrad, das zwischen dem Pumpenrad und dem Turbinenrad angeordnet ist. In einem Wandlerbetrieb des Drehmomentwandlers sind Schaufeln des Leitrads derart zwischen Schaufeln des Pumpen- und Turbinenrads angeordnet, dass eine Fluidzirkulation zwischen dem Turbinenrad und dem Pumpenrad die Leitradschaufeln umströmt.

Die vorliegende Erfindung hat sich zum Ziel gesetzt, ein hydrodynamisches Getriebe für ein Fahrzeug, insbesondere für ein Motorrad bereitzustellen, mit dem Effizienz und Fahrkomfort des Fahrzeugs gesteigert werden können.

Die vorliegende Erfindung stellt daher ein hydrodynamisches Getriebe für ein Fahrzeug, insbesondere für ein Motorrad, zur Verfügung, das eine Antriebswelle, einen Flüssigkeitsbehälter zur Speicherung von Hydraulikflüssigkeit sowie eine Vielzahl von Turbinen aufweist, die auf einer Abtriebswelle angeordnet sind und in ihrem Eintrittskanal jeweils ein Einlassventil aufweisen, über die Hydraulikflüssigkeit in die jeweilige Turbine geleitet wird, um diese anzutreiben. Beispielsweise können vier, fünf oder sechs Turbinen auf der Abtriebswelle angeordnet sein. Eine größere oder kleinere Anzahl von Turbinen ist ebenso möglich.

Die Antriebswelle kann an einer Seite mit einem Motor des Fahrzeugs verbunden sein und von diesem angetrieben werden. Bei dem Motor kann es sich beispielsweise um einen Verbrennungsmotor und/oder einen Elektromotor handeln. Die Abtriebswelle kann mit einem oder mehreren Rädern des Fahrzeugs verbindbar sein. Insbesondere kann die Abtriebswelle zwei Ausgänge umfassen, von denen mindestens einer an ein oder mehrere Räder des Fahrzeugs angeschlossen sein kann. Dabei können zwischen der Abtriebswelle und den Rädern weitere Übertragungselemente (z.B. Wellen, Zahnräder, Kupplungen etc.) vorhanden sein.

Des Weiteren enthält das hydrodynamische Getriebe eine Pumpe, die mit einer dem Motor gegenüberliegenden Seite der Antriebswelle verbunden ist und Hydraulikflüssigkeit aus dem Flüssigkeitsbehälter mit einem bestimmten Druck zu den Einlassventilen der Vielzahl von Turbinen fördert. Bei der Pumpe kann es sich beispielweise um eine Zahnradpumpe handeln. Jede andere geeignete Pumpe ist ebenso möglich. Die Pumpe kann in Abhängigkeit von einer Drehzahl der Antriebswelle einen Druck im Bereich von 1,5 bar bis 50 bar bereitstellen.

Zudem umfasst das hydrodynamische Getriebe eine Rücklaufleitung, die einen Austrittskanal der Vielzahl von Turbinen mit dem Flüssigkeitsbehälter verbindet.

Auf diese Weise kann das hydrodynamische Getriebe einen geschlossenen Hydraulikkreislauf enthalten, in dem Hydraulikflüssigkeit aus dem Flüssigkeitsbehälter zu der Vielzahl von Turbinen gefördert wird und von dort über die Rücklaufleitung wieder zurück in den Flüssigkeitsbehälter fließt. Mittels der Pumpe wird über die Antriebswelle eingespeiste mechanische Energie in hydraulische Energie umgewandelt, die eine der Vielzahl von Turbinen antreibt, wodurch an der Abtriebswelle ein höheres Drehmoment bereitgestellt werden kann als an der Antriebswelle. Dies ermöglicht es beispielsweise auch auf eine zusätzliche Anfahrkupplung zu verzichten, da diese Funktion ebenfalls von einer der Turbinen übernommen werden kann.

Gemäß einer Ausführungsform kann stromaufwärts der Vielzahl von Turbinen eine erste Sammelleitung und stromabwärts der Vielzahl von Turbinen eine zweite Sammelleitung angeordnet sein. Mit anderen Worten kann die erste Sammelleitung zwischen der Pumpe und den Turbinen und die zweite Sammelleitung zwischen den Turbinen und der Rücklaufleitung angeordnet sein.

In der ersten Sammelleitung kann beispielsweise Hydraulikflüssigkeit mit einem bestimmten Druck gespeichert sein, und die Pumpe kann Hydraulikflüssigkeit in die erste Sammelleitung fördern, um den bestimmten Druck bereitzustellen bzw. aufrechtzuerhalten. Bei Öffnen eines Einlassventils einer Turbine kann die gespeicherte hydraulische Energie dann in kinetische Energie zum Antreiben der Turbine umgewandelt werden. In der zweiten Sammelleitung kann aus den Turbinen austretende Hydraulikflüssigkeit zusammengeführt werden, bevor sie über die Rücklaufleitung zurück in den Flüssigkeitsbehälter gelangt.

Gemäß einer Ausführungsform kann jede der Vielzahl von Turbinen einen anderen Durchmesser haben. Zudem kann eine Turbinen mit einem größeren Durchmesser ein größeres Schluckvolumen und/oder eine größere Anzahl Turbinenschaufeln aufweisen als eine Turbine mit einem kleineren Durchmesser.

Aufgrund des unterschiedlichen Durchmessers kann jede Turbine einen anderen Übersetzungsbereich (Wandlerkennlinie) aufweisen, wodurch ein benötigtes Drehmoment an der Abtriebswelle optimal eingestellt werden kann. Die Wandlerkennlinie jeder Turbine kann insbesondere eine Drehmomentübersetzung zwischen Antriebs- und Abtriebswelle bei Betrieb der entsprechenden Turbine in Abhängigkeit von einem Drehzahlverhältnis zwischen Antriebs- und Abtriebswelle angeben. Alternativ oder zusätzlich kann die Wandlerkennlinie ein Drehmoment an der Abtriebswelle in Abhängigkeit von einer Turbinendrehzahl der betriebenen Turbine (bzw. einer daraus resultierenden Abtriebswellendrehzahl) bei einem bestimmten Druck vor der Turbine angeben.

In einer Ausführungsform kann ein Durchmesser der Turbinen auf der Abtriebswelle kontinuierlich ansteigen, so dass z.B. an einem Ende bzw.

Ausgang der Abtriebswelle eine Turbine mit einem kleinsten Durchmesser und an einem anderen Ende bzw. Ausgang der Abtriebswelle eine Turbine mit einem größten Durchmesser angeordnet ist. Eine andere Anordnung der unterschiedlich großen Turbinen auf der Abtriebswelle ist ebenfalls möglich.

Der Flüssigkeitsbehälter kann z.B. an einer Karosserie oder einem Rahmen des Fahrzeugs angebracht bzw. befestigt sein und eine verschließbare Öffnung zum Befüllen und Entleeren der Hydraulikflüssigkeit aufweisen. Bei der Hydraulikflüssigkeit kann es sich um eine Flüssigkeit auf Mineralöl- oder auf Wasserbasis handeln. Insbesondere kann die Hydraulikflüssigkeit ein Hydrauliköl sein.

Gemäß einer Ausführungsform kann das hydrodynamische Getriebe eine Recheneinheit umfassen, die ein benötigtes Drehmoment an der Abtriebswelle bestimmt und die Einlassventile der Vielzahl von Turbinen in Abhängigkeit von dem benötigten Drehmoment steuert. Das benötigte Drehmoment an der Abtriebswelle kann beispielsweise von der Recheneinheit basierend auf einem Fahrerwunschmoment, einer Drehzahl des Motors und/oder einer Fahrgeschwindigkeit des Fahrzeugs bestimmt werden. Dabei kann das Fahrerwunschmoment z.B. auf einer Gaspedal-/Gashebelstellung des Fahrzeugs basieren. Anstelle eines Gaspedals oder Gashebels kann das Fahrzeug eine beliebige Vorrichtung zur Vorgabe des Fahrerwunschmoments enthalten.

Es ist ebenso möglich, dass die Recheneinheit die Einlassventile basierend auf einer manuellen Eingabe eines Fahrers steuert. Bei den Einlassventilen kann es sich um elektrisch betätigbare Ventile, z.B. um Magnetventile oder Ventile mit einem elektrischen Stellantrieb handeln. Zum Betätigen (Öffnen und/oder Schließen) der Einlassventile kann die Recheneinheit z.B. ein entsprechendes Ansteuersignal an diese senden, um beispielsweise eine Magnetspule zu bestromen oder einen elektrischen Stellantrieb anzutreiben.

Gemäß einer Ausführungsform kann in einem Austrittskanal jeder der Vielzahl von Turbinen zudem ein Auslassventil angeordnet sein. Bei dem Auslassventil kann es sich insbesondere um ein mechanisches Ventil handeln. Beispielsweise kann ein Flatterventil zum Einsatz kommen, das mittels einer Druckdifferenz zwischen einem Innenraum und einer äußeren Umgebung der jeweiligen Turbine geöffnet werden kann.

In dem Austrittskanal der Turbine(n) kann ein Auslassventil angeordnet sein.

Stomaufwärts der Vielzahl von Turbinen kann eine erste Sammelleitung und stromabwärts der Vielzahl von Turbinen eine zweite Sammelleitung angeordnet sein.

Ein Ausgang der Pumpe kann über eine Rückströmleitung, die ein Rückströmventil aufweisen kann, mit dem Flüssigkeitsbehälter verbunden sein.

Gemäß einer Ausführungsform kann die Recheneinheit ein Einlassventil einer der Vielzahl von Turbinen öffnen, wenn das benötigte Drehmoment an der Abtriebswelle größer als eine erste vorbestimmte Drehmomentschwelle ist. Die erste vorbestimmte Drehmomentschwelle kann dabei auf einen Wert festgelegt werden, der sicherstellt, dass bei Überschreiten desselben ein Antrieb der Abtriebswelle vom Fahrer gewünscht ist. Beispielsweise kann dieser Wert auf null gesetzt werden. Um Toleranzen bei der Bestimmung des benötigten Drehmoments an der Abtriebswelle zu berücksichtigen, kann der Wert der ersten vorbestimmten Drehmomentschwelle größer null, z.B. in einem Bereich 0% bis 0,7% des maximalen Abtriebsmoments gewählt werden.

Durch das Öffnen des Einlassventils kann Hydraulikflüssigkeit, die mit einem bestimmten Druck vor diesem anliegt, in die Turbine geleitet und diese angetrieben werden. Dabei kann die Recheneinheit das Einlassventil derjenigen Turbine öffnen, deren Wandlerkennlinie geeignet ist, das benötigte Drehmoment an der Abtriebswelle bereitzustellen, während die Einlassventile der anderen Turbinen geschlossen bleiben. Dazu können beispielsweise Wandlerkennlinien der Vielzahl von Turbinen in der Recheneinheit gespeichert sein, anhand derer ein Abtriebswellenmoment jeder Turbine bestimmt werden kann.

Die Recheneinheit kann das benötigte Drehmoment an der Abtriebswelle mit den bestimmten Abtriebswellenmomenten der einzelnen Turbinen vergleichen und die Turbine auswählen, welche das benötigte Drehmoment liefern kann. Das Einlassventil der gewählten Turbine kann für eine bestimmte Zeit geöffnet bleiben und nachfolgend wieder geschlossen werden. Beispielsweise kann das Einlassventil der Turbine geöffnet bleiben, solange diese das benötigte Drehmoment z.B. bei steigender Turbinendrehzahl bzw. Abtriebswellendrehzahl bereitstellen kann. Wenn dies nicht mehr der Fall ist, kann das Einlassventil dieser Turbine geschlossen und ein Einlassventil einer Turbine mit einer anderen Wandlerkennlinie geöffnet werden, sofern das benötigte Drehmoment an der Abtriebswelle noch immer größer als die erste vorbestimmte Drehmomentschwelle ist.

Es ist ebenso möglich, dass der Fahrer des Fahrzeugs über eine manuelle Eingabe, z.B. auf einem Display des Fahrzeugs, eine Turbine auswählt, deren Einlassventil geöffnet werden soll. Auf diese Weise kann der Fahrer gezielt das Einlassventil einer von ihm gewünschten Turbine öffnen. Diese gezielte manuelle Auswahl kann von der Recheneinheit gegenüber einer automatische Auswahl einer Turbine in Abhängigkeit des benötigten Drehmoments an der Abtriebswelle priorisiert werden.

Gemäß einer Ausführungsform kann ein Ausgang der Pumpe über eine Rückströmleitung, die ein Rückströmventil aufweist, mit dem Flüssigkeitsbehälter verbunden sein. Insbesondere kann die Rückströmleitung von einer Leitung bzw. einem Leitungsabschnitt zwischen der Pumpe und der ersten Sammelleitung abzweigen. Dadurch kann bei geöffnetem Rückströmventil keine Hydraulikflüssigkeit von der Pumpe in die erste Sammelleitung gefördert werden, sondern diese wird umgehend zurück in den Flüssigkeitsbehälter geleitet. Auf diese Weise kann ein Antrieb der Abtriebswelle bei Betrieb des Motors unterbrochen werden. Bei dem Rückströmventil kann es sich insbesondere um ein elektrisch betätigbares Ventil, z.B. um ein Magnetventil oder ein Ventil mit einem elektrischen Stellantrieb handeln. Zum Betätigen (Öffnen und/oder Schließen) des Rückströmventils kann die Recheneinheit z.B. ein entsprechendes Ansteuersignal an dieses senden, um beispielsweise eine Magnetspule zu bestromen oder einen elektrischen Stellantrieb anzutreiben.

Gemäß einer Ausführungsform kann die Recheneinheit das Rückströmventil öffnen, wenn das benötigte Drehmoment an der Abtriebswelle kleiner als eine zweite vorbestimmte Drehmomentschwelle ist. Das benötigte Drehmoment an der Abtriebswelle kann beispielsweise nach einem Start des Motors, solange der Fahrer noch kein Wunschmoment z.B. über das Gaspedal bzw. den Gashebel anfordert, kleiner als die zweite vorbestimmte Drehmomentschwelle sein. Die Rückströmleitung mit dem Rückströmventil ermöglicht es somit, einen Leerlaufbetrieb des Motors bei direkter Anbindung bzw. Kopplung des hydrodynamischen Getriebes an den Motor einzustellen. Auf diese Weise kann auf eine zusätzliche Kupplung zwischen Motor und Getriebe verzichtet werden. Es ist ebenso möglich, dass der Fahrer das Rückströmventil über eine manuelle Eingabe, z.B. auf dem Display des Fahrzeugs oder mittels eines Schalters, direkt öffnen und/oder schließen kann, um den Leerlaufbetrieb des Motors ein- oder abzustellen.

Die zweite vorbestimmte Drehmomentschwelle kann auf einen gleichen Wert wie die erste vorbestimmte Drehmomentschwelle festgelegt werden. Es ist ebenso möglich, dass die zweite vorbestimmte Drehmomentschwelle größer oder kleiner als die erste vorbestimmte Drehmomentschwelle gewählt wird. Beispielsweise kann die zweite vorbestimmte Drehmomentschwelle kleiner als die erste vorbestimmte Drehmomentschwelle gewählt werden, so das zunächst das Rückströmventil geschlossen wird, bevor eines der Einlassventile der Turbinen geöffnet wird.

Insbesondere kann die Recheneinheit das Rückströmventil bei einem Start des Motors automatisch öffnen. Somit ist sichergestellt, dass das Fahrzeug nicht ungewollt losfährt. Sobald der Fahrer z.B. über das Gaspedal bzw. den Gashebel ein Wunschmoment anfordert und das benötigte Drehmoment an der Abtriebswelle die zweite vorbestimmte Drehmomentschwelle überschreitet, kann die Recheneinheit das Rückströmventil schließen und ein Einlassventil einer der Vielzahl von Turbinen öffnen. Der Start des Motors kann z.B. mittels einer manuellen Eingabe auf dem Display des Fahrzeugs erfolgen. Der Startbefehl kann von dort an die Recheneinheit des hydrodynamischen Getriebes gesendet werden. In gleicher Weise kann das Fahrzeug wieder gestoppt werden. Es ist ebenso möglich, dass das Fahrzeug über einen Schalter zum Starten und Stoppen des Motors verfügt.

Die Turbine(n) können ein Gehäuse mit einer Lagerung umfassen, in der die Abtriebswelle drehbar gelagert ist.

Gemäß einer Ausführungsform kann jede der Vielzahl von Turbinen über einen Freilauf mit der Abtriebswelle verbindbar sein. Insbesondere können die Freiläufe der Vielzahl von Turbinen baugleich ausgeführt sein.

Jeder der Freiläufe kann eine Außen- und eine Innenseite aufweisen, die beispielsweise als Außenring und Innenring ausgebildet sein können. Der Außenring kann dabei z.B. mit der Turbine und der Innenring mit der Abtriebswelle fest verbunden sein. Der Außen- und Innenring können gegeneinander sperren (Mitnahmemodus) oder freilaufen (Freilaufmodus), wobei im Mitnahmemodus ein Drehmoment über den Außenring des Freilaufs eingeleitet und über den Innenring auf die Abtriebswelle übertragen werden kann. Insbesondere kann sich der Freilauf in einer Drehrichtung der angetriebenen Turbine im Mitnahmemodus und entgegen der Drehrichtung der angetriebenen Turbine im Freilaufmodus befinden.

Gemäß einer Ausführungsform kann jede der Vielzahl von Turbinen eine Vielzahl von Turbinenschaufeln aufweisen, die beweglich an dem Freilauf befestigt sind. Insbesondere können die Turbinenschaufeln beweglich an dem Außenring des Freilaufs angebracht sein.

Gemäß einer Ausführungsform können die beweglichen Turbinenschaufeln von einer radialen Richtung in eine tangentiale Richtung des Freilaufs bewegt werden. Unter einer radialen Richtung des Freilaufs soll dabei eine Richtung senkrecht zu einer Oberfläche des Außenrings des Freilaufs verstanden werden. Dementsprechend soll unter einer tangentialen Richtung des Freilaufs eine Richtung tangential zu einer Oberfläche des Außenrings des Freilaufs verstanden werden.

Um die Turbinenschaufeln wie beschrieben zu bewegen, können die beweglichen Befestigungen der Turbinenschaufeln an dem Außenring des Freilaufs als Scharniere ausgeführt sein, die z.B. eine Klappbewegung um einen Winkel im Bereich von 80° bis 100°, insbesondere um einen Winkel von 90° aus der radialen Richtung in die tangentiale Richtung des Freilaufs erlauben. Jede andere bewegliche Befestigung, welche die beschriebene Bewegung erlaubt, ist ebenso möglich.

Gemäß einer Ausführungsform kann jede der Vielzahl von Turbinen ein Gehäuse mit einer Lagerung umfassen, in denen die Abtriebswelle drehbar gelagert ist.

Das Gehäuse kann insbesondere zweiteilig ausgeführt und die beiden Teile können miteinander verschraubt sein. Jede andere geeignete Verbindung der beiden Gehäuseteile ist ebenso möglich.

Zwischen einer Innenseite jedes der Gehäuseteile und einer Stirnseite des Freilaufs kann in axialer Richtung der Turbine jeweils ein Dichtring angebracht sein.

Gemäß einer Ausführungsform kann jede der Vielzahl von Turbine einen zu der Abtriebswelle konzentrischer Umlaufkanal aufweisen, der den Eintrittskanal und den Austrittskanal der jeweiligen Turbine verbindet, und in dem sich die Turbinenschaufeln in radialer Richtung des Freilaufs erstrecken, um Hydraulikflüssigkeit zu fördern.

Der Umlaufkanal kann eine Kreisbogenform aufweisen und so ausgestaltet sein, dass ein Mittelpunktswinkel eines der Form des Umlaufkanals zugrundeliegenden Kreisbogens zwischen Eintritts- und Austrittskanal zumindest 30°, weiter bevorzugt zumindest 60°, weiter bevorzugt zumindest 90°, weiter bevorzugt zumindest 120° und noch weiter bevorzugt zumindest 160° beträgt. Üblicherweise beträgt dieser Mittelpunktswinkel 180°. Zweckmäßigerweise kann der Umlaufkanal parallel zu einer Ebene senkrecht zu einer Achse der Abtriebswelle in dem Turbinengehäuse angeordnet sein. Ein Durchmesser des Umlaufkanals kann zweckmäßigerweise gleich oder größer als eine Länge der Turbinenschaufeln sein, damit diese sich in radialer Richtung des Freilaufs erstrecken können, um Hydraulikflüssigkeit zu fördern.

Gemäß einer Ausführungsform kann der der Eintrittskanal dazu eingerichtet sein, die Hydraulikflüssigkeit in tangentialer Richtung zu einem zu der Abtriebswelle konzentrischen Kreis in den Umlaufkanal einzuleiten. Ebenso kann der Austrittskanal dazu eingerichtet sein, die Hydraulikflüssigkeit in tangentialer Richtung zu dem zu der Abtriebswelle konzentrischen Kreis aus dem Umlaufkanal herauszuleiten.

Dabei kann durch den Eintrittskanal mit einer Strömungsgeschwindigkeit vₑᵢₙ in den Umlaufkanal tangential eintretende Hydraulikflüssigkeit auf im Umlaufkanal befindliche Vorderseiten der Turbinenschaufeln drücken und somit eine Rotation des Freilaufs in Strömungsrichtung der Hydraulikflüssigkeit bewirken. Die Hydraulikflüssigkeit kann nach dem Umlauf im Umlaufkanal mit einer Strömungsgeschwindigkeit vₐᵤₛ durch den Austrittskanal tangential aus der Turbine austreten.

Dies kann insbesondere mit einem konstanten Moment und mit tangentialer Wirkung erfolgen, d.h. die Strömungsrichtung der Hydraulikflüssigkeit kann an jedem Punkt im Umlaufkanal tangential zu dessen Kreisbogenform sein, wobei der Druck der Hydraulikflüssigkeit im Eintrittskanal pₑᵢₙ nahezu gleich dem der Hydraulikflüssigkeit im Austrittskanal pₐᵤₛ ist. Mit anderen Worten kann die tangentiale Wirkung an jedem Punkt während des gesamten Umlaufs der Hydraulikflüssigkeit im Umlaufkanal bestehen, wodurch ein hoher Wirkungsgrad erreicht werden kann.

Vorzugsweise ist der Umlaufkanal Teil eines ringförmig, konzentrisch um den Freilauf ausgebildeten Gesamtkanals, der Öffnungen für den Eintrittskanal und den Austrittskanal sowie einen Sperrbereich aufweist. Der Sperrbereich kann zweckmäßigerweise ein Kanal zwischen dem Austrittskanal und dem Eintrittskanal sein, dessen Durchmesser kleiner als eine Länge der Turbinenschaufeln ist. In diesem erstrecken sich die Turbinenschaufeln vorzugsweise in tangentialer Richtung des Freilaufs und fördern keine Hydraulikflüssigkeit. In dem Sperrbereich kann eine Sperrvorrichtung vorhanden sein, die zumindest teilweise, vorzugsweise vollständig, verhindert, dass Hydraulikflüssigkeit, die sich im Bereich des Austrittskanals befindet, zurück zum Eintrittskanal gelangen kann. Somit kann verhindert werden, dass bezüglich der in der Turbine umlaufend strömenden Hydraulikflüssigkeit ein "Kurzschluss" erfolgt.

Die Sperrvorrichtung kann beispielsweise durch ein Zusammenwirken der beweglichen Turbinenschaufeln mit einer Geometrie des Turbinengehäuses in dem Sperrbereich realisiert werden. Beispielsweise kann ein Querschnitt des Kanals zwischen dem Austrittskanal und dem Eintrittskanal mittels der Turbinenschaufeln versperrt werden. Die Sperrbereich kann dabei insbesondere so ausgebildet sein, dass eine Bewegung der Turbinenschaufeln von der radialen Richtung in die tangentiale Richtung des Freilaufs bewirkt wird. Dies kann beispielsweise dadurch erfolgen, dass ein den Turbinenschaufeln im ausgeklappten Zustand zur Verfügung stehenden Kanalquerschnitt bei Rotation des Freilaufs durch den Sperrbereich kontinuierlich immer weiter einschränkt, bis ein vollständiges Einklappen der jeweiligen Turbinenschaufel erreicht ist.

Gemäß einer Ausführungsform können der Umlaufkanal und der Sperrbereich durch eine außermittige Anordnung des Freilaufs in dem Gehäuse gebildet sein. Die außermittige Anordnung kann derart gewählt werden, dass der Umlaufkanal einen Durchmesser aufweist, der gleich oder größer als eine Länge der Turbinenschaufeln ist, und der Kanal welcher den Sperrbereich bildet, einen Durchmesser aufweist der kleiner als eine Länge der Turbinenschaufeln ist. Insbesondere kann der Sperrbereich in der Mitte zwischen Austritts- und Eintrittskanal seinen kleinsten Durchmesser aufweisen. Dadurch werden die Turbinenschaufeln bis zur Mitte des Sperrbereichs kontinuierlich eingeklappt und versperren dabei den "Kurzschlusskanal". Nachfolgend können sich die Turbinenschaufeln durch die Aufweitung des Sperrbereichs kontinuierlich von der tangentialen in die radialen Richtung des Freilaufs bewegen und diese im Eintrittskanal wieder einnehmen.

Das hydrodynamische Getriebe wird in einem Antrieb eines Fahrzeugs, verwendet. Bei einem erfindungsgemäßen Fahrzeug kann es sich insbesondere um ein Motorrad handeln.

Bei dem erfindungsgemäßen Verfahren zum Betreiben eines hydrodynamischen Getriebes wie oben beschrieben wird ein benötigtes Drehmoment an einer Abtriebswelle des hydrodynamischen Getriebes bestimmt. In Abhängigkeit von dem benötigten Drehmoment werden dann Einlassventile einer Vielzahl von Turbinen, die auf der Abtriebswelle angeordnet sind, gesteuert.

Gemäß einer Ausführungsform kann ein Einlassventil einer der Vielzahl von Turbinen geöffnet werden, wenn das benötigte Drehmoment an der Abtriebswelle größer als eine erste vorbestimmte Drehmomentschwelle ist. Dadurch kann Hydraulikflüssigkeit, die sich z.B. in einer ersten Sammelleitung vor den Einlassventilen befinden und einen bestimmten Druck aufweisen kann, in die Turbine geleitet und diese angetrieben werden. Die Hydraulikflüssigkeit kann mittels einer Pumpe aus einem Flüssigkeitsbehälter in die erste Sammelleitung gefördert werden.

Dabei kann das Einlassventil der Turbine geöffnet werden, welche geeignet ist, das benötigte Drehmoment an der Abtriebswelle bereitzustellen. Dazu können beispielsweise Wandlerkennlinien der einzelnen Turbinen in einer Recheneinheit gespeichert sein, welche z.B. eine Drehmomentübersetzung zwischen Antriebs- und Abtriebswelle bei Betrieb der entsprechenden Turbine in Abhängigkeit von einem Drehzahlverhältnis zwischen Antriebs- und Abtriebswelle angeben. Alternativ oder zusätzlich können die gespeicherten Wandlerkennlinien ein Drehmoment an der Abtriebswelle in Abhängigkeit von einer Turbinendrehzahl der jeweiligen Turbine (bzw. einer daraus resultierenden Abtriebswellendrehzahl) bei einem bestimmten Druck vor der Turbine angeben.

Das benötigte Drehmoment an der Abtriebswelle kann dann mit dem aus den einzelnen Wandlerkennlinien bestimmbaren Drehmoment verglichen und eine Turbine ausgewählt werden, welche das benötigte Drehmoment liefern kann.

Wenn das benötigte Drehmoment an der Abtriebswelle kleiner als eine zweite vorbestimmte Drehmomentschwelle ist, kann hingegen ein Rückströmventil in einer Rückströmleitung, die einen Ausgang der Pumpe des hydrodynamischen Getriebes mit dem Flüssigkeitsbehälter verbindet, geöffnet werden. Dadurch wird von der Pumpe gefördertes Hydraulikflüssigkeit wieder in den Flüssigkeitsbehälter zurückgeführt und gelangt nicht in die erste Sammelleitung bzw. in eine der Vielzahl von Turbinen. Gleichzeitig mit dem Öffnen des Rückströmventils können zusätzlich die Einlassventile aller Turbinen geschlossen werden. Auf diese Weise wird bei Antrieb der Pumpe durch den Motor die Abtriebswelle nicht angetrieben und das Fahrzeug befindet sich im Stillstand. Wenn das Fahrzeug bewegt werden soll und somit das benötigte Drehmoment an der Abtriebswelle die zweite vorbestimmte Drehmomentschwelle überschreitet, wird das Rückströmventil geschlossen, so dass mittels der Pumpe wieder ein bestimmter Druck in der Sammelleitung erzeugt werden kann. Dann wird das Einlassventil der Turbine geöffnet, welche geeignet ist, das benötigte Drehmoment an der Abtriebswelle bereitzustellen. Wenn das Fahrzeug aus dem Stand bewegt werden soll, kann dies insbesondere das Einlassventil der Turbine mit größtem Durchmesser sein, da diese das größte Übersetzungsverhältnis zwischen Antriebswelle und Abtriebswelle bereitstellen kann.

Insbesondere kann das Rückströmventil bei einem Start des Motors automatisch öffnen. Somit ist sichergestellt, dass das Fahrzeug nicht ungewollt losfährt. Sobald der Fahrer z.B. über das Gaspedal bzw. den Gashebel ein Wunschmoment anfordert und das benötigte Drehmoment an der Abtriebswelle die zweite vorbestimmte Drehmomentschwelle überschreitet, kann das Rückströmventil geschlossen und ein Einlassventil einer der Vielzahl von Turbinen geöffnet werden.

### Beispiele

Ausführungsbeispiele des erfindungsgemäßen hydrodynamischen Getriebes werden im Folgenden unter Bezugnahme auf die Figuren näher beschrieben. In den Figuren sind gleiche oder ähnliche Elemente mit gleichen Bezugszeichen versehen. Daher wird auf eine wiederholende Beschreibung verzichtet, sofern diese nicht notwendig ist.
Figur 1 zeigt in vereinfachter schematischer Schnittdarstellung eine Draufsicht eines hydrodynamischen Getriebes gemäß einem Ausführungsbeispiels der Erfindung.
Figur 2 zeigt in vereinfachter schematischer Schnittdarstellung einen Querschnitt durch eine Turbine gemäß einer weiteren Ausführungsbeispiel, die in dem in Figur 1 dargestellten Getriebe zum Einsatz kommen kann.
Figur 3 zeigt die Turbine aus Figur 2 in einer Seitenansicht.

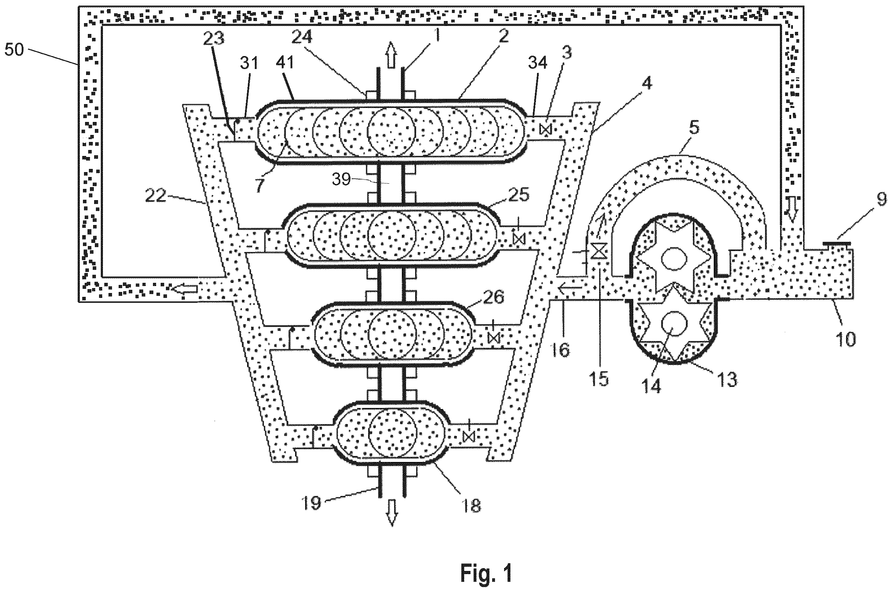

Das in Figur 1 dargestellte Ausführungsbeispiel eines erfindungsgemäßen hydrodynamische Getriebes für ein Fahrzeug (nicht dargestellt), insbesondere für ein Motorrad, enthält einen Flüssigkeitsbehälter 10 mit einer verschließbaren Öffnung 9, eine Pumpe 13 mit einer Antriebswelle 14, die vorliegend als Zahnradpumpe 13 ausgeführt ist, und vier Turbinen 2, 25, 26, 18, die auf einer Abtriebswelle 39 angebracht sind, welche an gegenüberliegenden Enden einen ersten und einen zweiten Ausgang 1, 19 aufweist.

Jede Turbine 2, 25, 26, 18 umfasst eine Vielzahl von Turbinenschaufeln 7, die in einem Gehäuse 41 angeordnet sind. Des Weiteren hat jede der vier Turbinen 2, 25, 26, 18 einen anderen Durchmesser. Dabei weist eine Turbine 2, die angrenzend an den ersten Ausgang 1 der Abtriebswelle 39 angeordnet ist, den größten Durchmesser und eine Turbine 18, die angrenzend an den zweiten Ausgang 19 der Abtriebswelle 39 angeordnet ist, einen kleinsten Durchmesser auf. Ein Wert des Durchmessers der einzelnen Turbinen 2, 25, 26, 18 ändert sich dabei kontinuierlich von dem größten Durchmesser der Turbine 2 zu dem kleinsten Durchmesser der Turbine 18. Entsprechend dem Durchmesser nimmt auch ein Schluckvolumen und eine Anzahl Turbinenschaufeln 7 der einzelnen Turbinen 2, 25, 26, 18 von der Turbine 2 zu der Turbine 18 kontinuierlich ab.

Aufgrund ihrer unterschiedlichen Durchmesser kann jede Turbine 2, 25, 26, 18 einen anderen Übersetzungsbereich (Wandlerkennlinie) aufweisen, wodurch ein benötigtes Drehmoment an der Abtriebswelle 39 optimal eingestellt werden kann. Die Wandlerkennlinie jeder Turbine 2, 25, 26, 18 kann insbesondere eine Drehmomentübersetzung zwischen Antriebs- und Abtriebswelle 14, 39 bei Betrieb der entsprechenden Turbine 2, 25, 26, 18 in Abhängigkeit von einem Drehzahlverhältnis zwischen Antriebs- und Abtriebswelle 14, 39 angeben. Alternativ oder zusätzlich kann die Wandlerkennlinie ein Drehmoment an der Abtriebswelle 39 in Abhängigkeit von einer Turbinendrehzahl der betriebenen Turbine 2, 25, 26, 18 (bzw. einer daraus resultierenden Abtriebswellendrehzahl) bei einem bestimmten Druck vor der Turbine 2, 25, 26, 18 angeben.

Die Abtriebswelle 39 ist mittels einer Lagerung 24, die vorliegend zwei Lager 24 auf gegenüberliegenden Seiten der Turbinengehäuse 41 umfasst, drehbar in den Turbinengehäusen 41 gelagert und kann mit einem oder mehreren Rädern (nicht dargestellt) des Fahrzeugs verbunden sein. Dabei können zwischen der Abtriebswelle 39 und den Rädern weitere Übertragungselemente (z.B. Wellen, Zahnräder, Kupplungen etc.) vorhanden sein (nicht dargestellt).

Die Antriebswelle 14 kann insbesondere direkt mit einem Motor (nicht dargestellt) des Fahrzeugs verbunden sein. Bei dem Fahrzeugmotor kann es sich um einen Verbrennungsmotor und/oder um einen Elektromotor handeln.

Die Zahnradpumpe 13 fördert Hydraulikflüssigkeit (durch Punkte angedeutet) von dem Flüssigkeitsbehälter 10 über eine Leitung 16 zu einer ersten Sammelleitung 4. In dieser kann die Hydraulikflüssigkeit mit einem bestimmten Druck vorliegen, und die Zahnradpumpe 13 kann kontinuierlich Hydraulikflüssigkeit in die erste Sammelleitung 4 fördern, um den bestimmten Druck bereitzustellen bzw. aufrechtzuerhalten. Die Zahnradpumpe 13 kann in Abhängigkeit von einer Drehzahl der Antriebswelle 14 einen Druck im Bereich von 1,5 bar bis 50 bar bereitstellen.

Von der erstem Sammelleitung 4 zweigen vier Eintrittskanäle 34 in die einzelnen Turbinen 2, 25, 26, 18 ab, in denen jeweils ein Einlassventil 3 angebracht ist. Die erste Sammelleitung 4 ist dabei derart an den Turbinen 2, 25, 26, 28 angebracht, dass die vier Eintrittskanäle 34 eine gleiche Länge aufweisen. Bei den Einlassventilen 3 kann es sich um elektrisch betätigbare Ventile, z.B. um Magnetventile oder Ventile mit einem elektrischen Stellantrieb handeln. Diese können von einer Recheneinheit (nicht dargestellt) des hydrodynamischen Getriebes zum Öffnen und/oder Schließen der Eintrittskanäle 34 angesteuert werden.

Stromabwärts jeder Turbine 2, 25, 26, 18 ist vorliegend jeweils ein Austrittskanal 31 mit einem mechanischen Auslassventil 23 angeordnet. Bei den Auslassventilen 23 kann es sich beispielsweise um Flatterventile handeln, die mittels einer Druckdifferenz zwischen einem Innenraum des Turbinengehäuses 41 und einer äußeren Umgebung der Turbine 2, 25, 26, 18 geöffnet werden können. Die Austrittskanäle 31 münden in eine zweite Sammelleitung 22, von der aus den Turbinen 2, 25, 26, 18 austretende Hydraulikflüssigkeit über eine Rücklaufleitung 50 zurück in den Flüssigkeitsbehälter 10 fließt. Analog zu der ersten Sammelleitung 4 ist auch die zweite Sammelleitung 22 derart an den Turbinen 2, 25, 26, 28 angebracht, dass die vier Austrittskanäle 31 eine gleiche Länge aufweisen.

Auf diese Weise kann das hydrodynamische Getriebe einen geschlossenen Hydraulikkreislauf ausbilden, in dem Hydraulikflüssigkeit aus dem Flüssigkeitsbehälter 10 zu der Vielzahl von Turbinen 2, 25, 26, 18 gefördert wird und von dort über die Rücklaufleitung 50 wieder zurück in den Flüssigkeitsbehälter 10 gelangt. Mittels der Zahnradpumpe 13 wird über die Antriebswelle 14 eingespeiste mechanische Energie in hydraulische Energie umgewandelt, die eine der Vielzahl von Turbinen 2, 25, 26, 18 antreibt, wodurch an der Abtriebswelle 39 ein höheres Drehmoment bereitgestellt werden kann als an der Antriebswelle 14. Dies ermöglicht es beispielsweise auch auf eine zusätzliche Anfahrkupplung zu verzichten, da diese Funktion ebenfalls von einer der Turbinen 2, 25, 26, 18 übernommen werden kann.

In dem gezeigten Ausführungsbeispiel sind die Eintrittskanäle 34 und die Austrittskanäle 31 sowie die erste und zweite Sammelleitung 4, 22 auf gegenüberliegenden Seiten der Turbinen 2, 25, 26, 18 angeordnet. Dabei befinden sich die Eintritts- und Austrittsleitungen 34, 31 in einer Ebene, wodurch ein symmetrisches Ein- und Ausströmverhalten der Hydraulikflüssigkeit in Bezug auf eine Längsachse der Turbinen 2, 25, 26, 18 erzielt werden kann. Zudem wird deutlich, dass das die Turbinen 2, 25, 26, 18 mit den Eintritts- und Austrittsleitungen 34, 31 sowie den beiden Sammelleitungen 4, 22 in der gezeigten Draufsicht eine kompakte V-Form aufweisen, die es ermöglicht, das hydrodynamische Getriebe in einem begrenzten Bauraum zu montieren.

Stromabwärts der Zahnradpumpe 13 zweigt eine Rückströmleitung 5 mit einem Rückströmventil 15 von der Leitung 16 zwischen Zahnradpumpe 13 und erster Sammelleitung 4 ab. Diese verbindet einen Ausgang der Zahnradpumpe 13 mit dem Flüssigkeitsbehälter 10, so dass bei geöffnetem Rückströmventil 15 keine Hydraulikflüssigkeit von der Zahnradpumpe 13 in die erste Sammelleitung 4 gefördert, sondern diese umgehend zurück in den Flüssigkeitsbehälter 10 geleitet wird. Auf diese Weise kann durch Öffnen des Rückströmventils 15 ein Antrieb der Abtriebswelle 39 bei Betrieb des Motors unterbrochen werden. Die Rückströmleitung 5 mit dem Rückströmventil 15 ermöglicht es somit, einen Leerlaufbetrieb des Motors bei direkter Anbindung bzw. Kopplung des hydrodynamischen Getriebes an den Motor einzustellen. Dadurch kann auf eine zusätzliche Kupplung zwischen Motor und Getriebe verzichtet werden. Die Rückströmleitung 5 weist vorliegend eine strömungsgünstige bogenförmige Leitungsführung auf, wodurch im Leerlauf des Motors nur geringe Strömungsverluste auftreten.

Bei dem Rückströmventil 15 kann es sich insbesondere um ein elektrisch betätigbares Ventil, z.B. um ein Magnetventil oder ein Ventil mit einem elektrischen Stellantrieb handeln. Zum Betätigen (Öffnen und/oder Schließen) des Rückströmventils 15 kann die Recheneinheit z.B. ein entsprechendes Ansteuersignal an dieses senden, um beispielsweise eine Magnetspule zu bestromen oder einen elektrischen Stellantrieb anzutreiben. Ein Öffnungsquerschnitt des Rückströmventils 15 kann im Wesentlichen einem Querschnitt der Rückströmleitung 5 entsprechen, so dass das Rückströmventil 15 keine oder nur geringe Strömungsverluste verursacht.

Um ein benötigtes Drehmoment zum Antrieb des Fahrzeugs an der Abtriebswelle 39 bereitzustellen, wird dieses von der Recheneinheit bestimmt und die Einlassventile 3 der einzelnen Turbinen 2, 25, 26, 18 werden abhängig von dem benötigten Drehmoment gesteuert. Das benötigte Drehmoment an der Abtriebswelle 39 kann beispielsweise von der Recheneinheit basierend auf einem Fahrerwunschmoment, einer Drehzahl des Motors und/oder einer Fahrgeschwindigkeit des Fahrzeugs bestimmt werden. Dabei kann das Fahrerwunschmoment z.B. auf einer Gaspedal-/Gashebelstellung (nicht dargestellt) des Fahrzeugs basieren.

Insbesondere kann die Recheneinheit ein Einlassventil 3 einer der vier Turbinen 2, 25, 26, 18 öffnen, wenn das benötigte Drehmoment an der Abtriebswelle 39 größer als eine erste vorbestimmte Drehmomentschwelle ist. Die erste vorbestimmte Drehmomentschwelle kann dabei auf einen Wert festgelegt werden, der sicherstellt, dass bei Überschreiten desselben ein Antrieb der Abtriebswelle 39 von einem Fahrer gewünscht ist. Beispielsweise kann dieser Wert auf null gesetzt werden. Um Toleranzen bei der Bestimmung des benötigten Drehmoments an der Abtriebswelle 39 zu berücksichtigen, kann der Wert größer null, z.B. in einem Bereich von 0% bis 0,7% des maximalen Abtriebsmoments gewählt werden. Durch das Öffnen des Einlassventils 3 kann Hydraulikflüssigkeit in die zugehörige Turbine 2, 25, 26, 18 geleitet und diese dadurch angetrieben werden. Dabei kann die Recheneinheit das Einlassventil 3 derjenigen Turbine 2, 25, 26, 18 öffnen, deren Wandlerkennlinie geeignet ist, das benötigte Drehmoment an der Abtriebs-welle 39 bereitzustellen, während die Einlassventile 3 der anderen Turbinen 2, 25, 26, 18 geschlossen bleiben. Dazu können beispielsweise Wandler-kennlinien der vier Turbinen 2, 25, 26, 18 in der Recheneinheit gespeichert sein, anhand derer ein Abtriebswellenmoment jeder Turbine 2, 25, 26, 18 bestimmt werden kann.

Die Recheneinheit kann das benötigte Drehmoment an der Abtriebswelle 39 mit den aus den Wandlerkennlinien bestimmten Abtriebswellenmomenten der einzelnen Turbinen 2, 25, 26, 18 vergleichen und die Turbine 2, 25, 26, 18 auswählen, welche das benötigte Drehmoment liefern kann. Das Einlassventil 3 der gewählten Turbine 2, 25, 26, 18 kann für eine bestimmte Zeit geöffnet bleiben und nachfolgend wieder geschlossen werden. Beispielsweise kann das Einlassventil 3 der Turbine 2, 25, 26, 18 geöffnet bleiben, solange diese das benötigte Drehmoment z.B. bei steigender Turbinendrehzahl bzw. Abtriebswellendrehzahl bereitstellen kann. Wenn dies nicht mehr der Fall ist, kann das Einlassventil 3 dieser Turbine 2, 25, 26, 18 geschlossen und ein Einlassventil 3 einer Turbine 2, 25, 26, 18 mit einer anderen Wandlerkennlinie geöffnet werden, sofern das benötigte Drehmoment an der Abtriebswelle 39 noch immer größer als die erste vorbestimmte Drehmomentschwelle ist. Es ist ebenso möglich, dass der Fahrer des Fahrzeugs über eine manuelle Eingabe, z.B. auf einem Display (nicht dargestellt) des Fahrzeugs, eine Turbine 2, 25, 26, 18 auswählt, deren Einlassventil 3 geöffnet werden soll. Auf diese Weise kann der Fahrer gezielt das Einlassventil 3 einer von ihm gewünschten Turbine 2, 25, 26, 18 öffnen. Diese gezielte manuelle Auswahl kann von der Recheneinheit gegenüber einer automatische Auswahl einer Turbine 2, 25, 26, 18 in Abhängigkeit des benötigten Drehmoments an der Abtriebswelle 39 priorisiert werden.

Wenn das benötigte Drehmoment an der Abtriebswelle 39 kleiner als eine zweite vorbestimmte Drehmomentschwelle ist, kann die Recheneinheit das Rückströmventil 15 öffnen. Die zweite vorbestimmte Drehmomentschwelle kann dabei auf einen gleichen Wert wie die erste vorbestimmte Drehmomentschwelle festgelegt werden. Es ist ebenso möglich, dass die zweite vorbestimmte Drehmomentschwelle größer oder kleiner als die erste vorbestimmte Drehmomentschwelle gewählt wird. Das benötigte Drehmoment an der Abtriebswelle 39 kann beispielsweise nach einem Start des Motors, solange der Fahrer noch kein Wunschmoment z.B. über das Gaspedal bzw. den Gashebel anfordert, kleiner als die zweite vorbestimmte Drehmomentschwelle sein. Es ist ebenso möglich, dass der Fahrer das Rückströmventil 15 über eine manuelle Eingabe, z.B. auf dem Display des Fahrzeugs oder mittels eines Schalters (nicht dargestellt), direkt öffnen und/oder schließen kann, um den Leerlaufbetrieb des Motors ein- oder abzustellen.

Insbesondere kann die Recheneinheit das Rückströmventil 15 bei einem Start des Motors automatisch öffnen. Somit ist sichergestellt, dass das Fahrzeug nicht ungewollt losfährt. Sobald der Fahrer dann z.B. über das Gaspedal bzw. den Gashebel ein Wunschmoment anfordert und das benötigte Drehmoment an der Abtriebswelle 39 die zweite vorbestimmte Drehmomentschwelle überschreitet, kann die Recheneinheit das Rückströmventil 15 schließen und ein Einlassventil 3 einer der vier Turbinen 2, 25, 26, 18 öffnen. Der Start des Motors kann z.B. mittels einer manuellen Eingabe auf dem Display des Fahrzeugs erfolgen. Der Startbefehl kann von dort an die Recheneinheit des hydrodynamischen Getriebes gesendet werden. In gleicher Weise kann das Fahrzeug wieder gestoppt werden. Es ist ebenso möglich, dass das Fahrzeug über einen Schalter (nicht dargestellt) zum Starten und Stoppen des Motors verfügt.

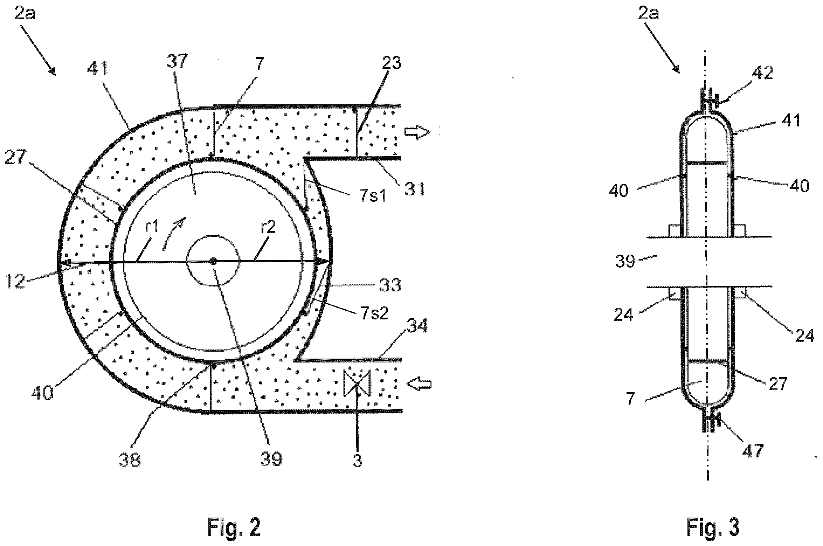

Ein weiteres Ausführungsbeispiel für eine Turbine 2a, wie sie in dem in Figur 1 dargestellten Getriebe zum Einsatz kommen kann, ist in den Figuren 2 und 3 dargestellt. Dabei zeigt Figur 2 einen Querschnitt und Figur 3 eine Seitenansicht der Turbine 2a.

Die Turbine 2a umfasst ein Gehäuse 41 in dem ein Freilauf 27, 37 außermittig angeordnet ist. Der Freilauf 27, 37 enthält einen Innenring 37, der fest mit der Abtriebswelle 39 verbunden ist, und einen Außenring 27, an dem die Turbinenschaufeln 7 mittels Scharnieren 38 beweglich befestigt sind. Über die Scharniere 38 können die Turbinenschaufeln 7 von einer radialen Richtung in eine tangentiale Richtung des Freilaufs 27, 37 bewegt werden. Unter einer radialen Richtung des Freilaufs 27, 37 soll dabei eine Richtung senkrecht zu einer Oberfläche des Außenrings 27 des Freilaufs 27, 37 verstanden werden. Dementsprechend soll unter einer tangentialen Richtung des Freilaufs 27, 37 eine Richtung tangential zu der Oberfläche des Außenrings 27 des Freilaufs 27, 37 verstanden werden. Die Scharniere 38 erlauben vorliegend eine Klappbewegung um einen Winkel im Bereich von 80° bis 100°, insbesondere um einen Winkel von 90° aus der radialen Richtung in die tangentiale Richtung des Freilaufs 27, 37.

Der Außen- und Innenring 27, 37 des Freilaufs 27, 37 können gegeneinander sperren (Mitnahmemodus) oder freilaufen (Freilaufmodus), wobei im Mitnahmemodus ein Drehmoment über den Außenring des Freilaufs eingeleitet und über den Innenring auf die Abtriebswelle übertragen werden kann.. Insbesondere kann sich der Freilauf 27, 37 in einer Drehrichtung der Turbine 2a im Mitnahmemodus und entgegen der Drehrichtung der Turbine 2a im Freilaufmodus befinden.

Das Gehäuse 41 der Turbine 2a ist zweiteilig ausgeführt, wobei die beiden nicht näher bezeichneten Gehäuseteile mittels zweier Verschraubungen 42, 47 miteinander verbunden sind. Zwischen einer Innenseite jedes der Gehäuseteile und den Stirnseiten des Innenrings 37 ist in axialer Richtung der Turbine 2a jeweils ein Dichtring 40 angebracht.

Im Gegensatz zu den in Figur 1 gezeigten Turbinen 2, 25, 25, 18 sind der Eintrittskanal 34 und der Austrittskanal 31 der hier vorliegenden Turbine 2a auf derselben Seite angeordnet. Diese befinden sich in einer Ebene und sind in vertikaler Richtung übereinander angeordnet. Durch die außermittige Anordnung des Freilaufs 27, 37 sind in dem Gehäuse 41 ein zu der Abtriebswelle 39 konzentrischer Umlaufkanal 12 und ein weiterer Kanal 33, der einen Sperrbereich 33 darstellt, ausgebildet. Der Umlaufkanal 12 weist vorliegend eine Kreisbogenform auf und ist so ausgestaltet, dass ein Mittelpunktswinkel eines seiner Form zugrundeliegenden Kreisbogens 180° beträgt.

Die beiden Kanäle 12, 33 haben einen unterschiedlichen Durchmesser, wobei vorliegend ein Durchmesser des Umlaufkanals 12 im Wesentlichen einer Länge der Turbinenschaufeln 7 entspricht, während ein Durchmesser des weiteren Kanals 33 kleiner als die Länge der Turbinenschaufeln 7 ist. Der Begriff "im Wesentlichen einer Länge der Turbinenschaufeln 7 entsprechen" soll insbesondere bedeuten, dass der Durchmesser des Umlaufkanals 12 gerade so viel größer als die Länge der Turbinenschaufeln 7 ist, dass diese sich in radialer Richtung des Freilaufs 27, 37 erstrecken können, ohne eine Innenseite des Gehäuses 41 zu berühren.

Der Umlaufkanal verbindet den Eintrittskanal 34 und den Austrittskanal 31 der Turbine 2a und in dem Umlaufkanal 12 erstrecken sich die Turbinenschaufeln 7 in radialer Richtung des Freilaufs 27, 37, um Hydraulikflüssigkeit zu fördern. Wenn das Einlassventil 3 der Turbine 2a geöffnet ist, so kann diese von der Hydraulikflüssigkeit angetrieben werden, die mit einer zu dem Druck in der ersten Sammelleitung 4 korrespondierenden Strömungsgeschwindigkeit vₑᵢₙ in die Turbine 2a eintritt. Dabei werden die in dem Umlaufkanal 12 befindlichen Turbinenschaufeln 7, die sich in radialer Richtung des Freilaufs 27, 37 erstrecken, mit einer hydraulischen Kraft beaufschlagt. Insbesondere kann durch den Eintrittskanal 34 mit der Strömungsgeschwindigkeit vₑᵢₙ in den Umlaufkanal 12 tangential eintretende Hydraulikflüssigkeit auf die im Umlaufkanal 12 befindlichen Vorderseiten der Turbinenschaufeln 7 drücken und somit eine Rotation des Freilaufs 27, 37 in Strömungsrichtung der Hydraulikflüssigkeit bewirken. Die Hydraulikflüssigkeit kann nach dem Umlauf im Umlaufkanal 12 mit einer Strömungsgeschwindigkeit vₐᵤₛ durch den Austrittskanal 31 tangential aus der Turbine 2a austreten. Dies kann insbesondere mit einem konstanten Moment und mit tangentialer Wirkung erfolgen, d.h. die Strömungsrichtung der Hydraulikflüssigkeit kann an jedem Punkt im Umlaufkanal 12 tangential zu dessen Kreisbogenform sein, wobei der Druck pₑᵢₙ der Hydraulikflüssigkeit im Eintrittskanal 34 nahezu gleich dem Druck pₐᵤₛ der Hydraulikflüssigkeit im Austrittskanal 31 ist. Mit anderen Worten kann die tangentiale Wirkung an jedem Punkt während des gesamten Umlaufs der Hydraulikflüssigkeit im Umlaufkanal bestehen, wodurch ein hoher Wirkungsgrad erreicht werden kann.

Der Kanal 33, welcher den Sperrbereich 33 darstellt, ist zwischen dem Austrittskanal 31 und dem Eintrittskanal 34 ausgebildet. In diesem erstrecken sich die Turbinenschaufeln 7 vorzugsweise in tangentialer Richtung des Freilaufs 27, 37 und fördern keine Hydraulikflüssigkeit. Mittels des Sperrbereichs 33 kann zumindest teilweise, vorzugsweise vollständig, verhindert werden, dass Hydraulikflüssigkeit, die sich im Bereich des Austrittskanals 31 befindet, zurück zum Eintrittskanal 34 gelangen kann. Somit kann verhindert werden, dass bezüglich der in der Turbine 2a umlaufend strömenden Hydraulikflüssigkeit ein "Kurzschluss" erfolgt.

Die Sperrwirkung wird vorliegend durch ein Zusammenwirken der beweglichen Turbinenschaufeln 7 mit einer Geometrie des Turbinengehäuses 41 in dem Sperrbereich 33 realisiert. Dabei kann ein Querschnitt des Sperrbereichs 33 mittels der Turbinenschaufeln 7 versperrt werden. Dies wird anhand der beiden Turbinenschaufeln 7s1, 7s2, welche sich in den Sperrbereich 33 befinden, deutlich. Der Sperrbereich 33 ist dabei derart ausgebildet, dass eine Bewegung der Turbinenschaufeln 7s1, 7s2 von der radialen Richtung in die tangentiale Richtung des Freilaufs 27, 37 bewirkt wird. In dem vorliegenden Ausführungsbeispiel weist der Sperrbereich 33 in der Mitte zwischen Austritts- und Eintrittskanal 31, 34 seinen kleinsten Durchmesser auf. Dadurch werden die Turbinenschaufeln 7s1, 7s2 bis zur Mitte des Sperrbereichs 33 kontinuierlich eingeklappt und versperren dabei den Querschnitt. Nachfolgend können sich die Turbinenschaufeln 7s1, 7s2 durch die Aufweitung des Sperrbereichs kontinuierlich von der tangentialen zurück in die radialen Richtung des Freilaufs 27, 37 bewegen und diese im Eintrittskanal 34 wieder einnehmen.

In einer Hälfte der Turbine 2a, welche den Umlaufkanal 12 umfasst, weist diese einen ersten Radius r1 zwischen einer Mittelachse der Abtriebswelle 39 und einer äußeren Oberfläche des Gehäuses 41 auf, der insbesondere der Hälfte des Durchmessers der größten Turbine 2 aus Figur 1 entsprechen kann. In einer Hälfte, welche den Sperrbereich 33 umfasst, weist die Turbine 2a hingegen einen zweiten Radius r2 zwischen der Mittelachse der Abtriebswelle 39 und der äußeren Oberfläche des Turbinengehäuses 41 auf, der kleiner als der erste Radius r1 ist. Dadurch kann eine Breite r1 + r2 der Turbine 2a gegenüber einer Breite der Turbine 2, die deren Durchmesser entspricht, deutlich reduziert werden, so dass der benötigte Bauraum für das Getriebe kleiner ausfallen kann. Damit ermöglicht die Turbine 2a ein deutlich kompakteres Design des Turbinengehäuses 41 bei gleichzeitiger Steigerung der Effizienz.

### Bezugszeichenliste:

1, 19 erster und zweiter Ausgang Abtriebswelle
2, 2a, 25, 26, 18 Turbinen
3 Einlassventil
4 erste Sammelleitung
5 Rückströmleitung
7, 7s1, 7s2 Turbinenschaufel
9 verschließbare Öffnung Flüssigkeitsbehälter
10 Flüssigkeitsbehälter
12 Umlaufkanal
13 Pumpe, Zahnradpumpe
14 Antriebswelle
15 Rückströmventil
16 Leitung zwischen Pumpe und erster Sammelleitung
22 zweite Sammelleitung
23 Auslassventil
24 Lagerung, Lager
27 Freilauf-Außenring
31 Austrittskanal
33 Kanal, Sperrbereich
34 Eintrittskanal
37 Freilauf-Innenring
38 bewegliche Befestigung, Scharnier
39 Abtriebswelle
40 Dichtring
41 Gehäuse
42, 47 Verschraubungen Gehäuse
50 Rücklaufleitung

## Patentansprüche

1. Hydrodynamisches Getriebe für ein Fahrzeug, insbesondere für ein Motorrad, aufweisend
- eine Antriebswelle (14),
- einen Flüssigkeitsbehälter (10) zur Speicherung von Hydraulikflüssigkeit;
- eine Vielzahl von Turbinen (2, 2a, 25, 26, 18), die auf einer Abtriebswelle (39) angeordnet sind und in ihrem Eintrittskanal (34) jeweils ein Einlassventil (3) aufweisen, das dazu eingerichtet ist, Hydraulikflüssigkeit in die Turbine (2, 2a, 25, 26, 18) zu leiten, um diese anzutreiben;
- eine Pumpe (13), die mit der Antriebswelle (14) verbunden und dazu eingerichtet ist, Hydraulikflüssigkeit aus dem Flüssigkeitsbehälter (10) mit einem bestimmten Druck zu den Einlassventilen (3) der Vielzahl von Turbinen (2, 2a, 25, 26, 18) zu fördern
- eine Rücklaufleitung (50), die einen Austrittskanal (31) der Vielzahl von Turbinen (2, 2a, 25, 26, 18) mit dem Flüssigkeitsbehälter (10) verbindet.

2. Hydrodynamisches Getriebe nach Anspruch 1, wobei jede der Vielzahl von Turbinen (2, 2a, 25, 26, 18) einen anderen Durchmesser aufweist.

3. Hydrodynamisches Getriebe nach Anspruch 1 oder 2, wobei jede der Vielzahl von Turbinen (2, 2a, 25, 26, 18) über einen Freilauf (27, 37) mit der Abtriebswelle (39) verbindbar ist.

4. Hydrodynamisches Getriebe nach Anspruch 3, wobei jede der Vielzahl von Turbinen (2, 2a, 25, 26, 18) eine Vielzahl von Turbinenschaufeln (7) aufweist, die beweglich an dem Freilauf (27, 37) befestigt sind.

5. Hydrodynamisches Getriebe nach Anspruch 4, wobei die beweglichen Turbinenschaufeln (7) dazu eingerichtet sind, von einer radialen Richtung in eine tangentiale Richtung des Freilaufs (27, 37) bewegt zu werden.

6. Hydrodynamisches Getriebe nach Anspruch 4 oder 5, wobei jede der Vielzahl von Turbinen (2, 2a, 25,26, 18) einen zu der Abtriebswelle (39) konzentrischer Umlaufkanal (12) aufweist, der den Eintrittskanal (34) und den Austrittskanal (31) verbindet, und in dem sich die Turbinenschaufeln (7) in radialer Richtung des Freilaufs (27, 37) erstrecken.

7. Hydrodynamisches Getriebe nach Anspruch 6, wobei jede der Vielzahl von Turbinen (2, 2a, 25,26, 18) einen Sperrbereich (33) aufweist, der zwischen dem Austrittskanal (31) und dem Eintrittskanal (34) angeordnet ist, und in dem sich die Turbinenschaufeln (7s1, 7s2) in tangentialer Richtung des Freilaufs (27, 37) erstrecken.

8. Hydrodynamisches Getriebe nach Anspruch 6 oder 7, wobei der Eintrittskanal (34) dazu eingerichtet ist, die Hydraulikflüssigkeit in tangentialer Richtung zu einem zu der Abtriebswelle (39) konzentrischen Kreis in den Umlaufkanal (12) einzuleiten, und der Austrittskanal (31) dazu eingerichtet ist, die Hydraulikflüssigkeit in tangentialer Richtung zu dem zu der Abtriebswelle (39) konzentrischen Kreis aus dem Umlaufkanal (12) herauszuleiten.

9. Hydrodynamisches Getriebe nach Anspruch 7 und 8, wobei der Umlaufkanal (12) und der Sperrbereich (33) durch eine außermittige Anordnung des Freilaufs (27, 37) in dem Gehäuse (41) gebildet sind.

10. Hydrodynamisches Getriebe nach mindestens einem der vorstehenden Ansprüche, ferner umfassend eine Recheneinheit, die dazu eingerichtet ist, ein benötigtes Drehmoment an der Abtriebswelle (39) zu bestimmen und die Einlassventile (3) der Vielzahl von Turbinen (2, 2a, 25, 26, 18) in Abhängigkeit von dem benötigten Drehmoment zu steuern.

11. Hydrodynamisches Getriebe nach Anspruch 10, wobei die Recheneinheit dazu eingerichtet ist, ein Einlassventil (3) einer der Vielzahl von Turbinen (2, 2a, 25, 26, 18) zu öffnen, wenn das benötigte Drehmoment an der Abtriebswelle (39) größer als eine erste vorbestimmte Drehmomentschwelle ist.

12. Hydrodynamisches Getriebe nach Anspruch 10 oder 11, wobei die Recheneinheit dazu eingerichtet ist, das Rückströmventil (15) zu öffnen, wenn das benötigte Drehmoment an der Abtriebswelle (39) kleiner als eine zweite vorbestimmte Drehmomentschwelle ist.

13. Verfahren zum Betreiben eines hydrodynamischen Getriebes nach einem der vorstehenden Ansprüche umfassend die Schritte
- Bestimmen eines benötigtes Drehmoments an einer Abtriebswelle (39) des hydrodynamischen Getriebes; und
- Steuern von Einlassventilen (3) einer Vielzahl von Turbinen (2, 2a, 25, 26, 18), die auf der Abtriebswelle (39) angeordnet sind, in Abhängigkeit von dem benötigten Drehmoment.

14. Verfahren nach Anspruch 13, ferner umfassend die Schritte
- Öffnen eines Einlassventils (3) einer der Vielzahl von Turbinen (2, 2a, 25, 26, 18), wenn das benötigte Drehmoment an der Abtriebswelle (39) größer als eine erste vorbestimmte Drehmomentschwelle ist; und
- Öffnen eines Rückströmventils (15) in einer Rückströmleitung (5), die einen Ausgang einer Pumpe (13) des hydrodynamischen Getriebes mit einem Flüssigkeitsbehälter (10) verbindet, wenn das benötigte Drehmoment an der Abtriebswelle (39) kleiner als eine zweite vorbestimmte Drehmomentschwelle ist.

15. Verwendung eines hydrodynamischen Getriebes nach mindestens einem der Ansprüche 1 bis 12 in einem Antrieb eines Fahrzeugs, insbesondere eines Motorrads.

16. Fahrzeug, insbesondere ein Motorrad, umfassend ein hydrodynamischen Getriebe nach mindestens einem der Ansprüche 1 bis 12.

## Geänderte Patentansprüche

### Geänderte Patentansprüche gemäss Regel 137(2) EPÜ.

1. Hydrodynamisches Getriebe für ein Fahrzeug, insbesondere für ein Motorrad, aufweisend
- eine Antriebswelle (14),
- einen Flüssigkeitsbehälter (10) zur Speicherung von Hydraulikflüssigkeit;
- eine Vielzahl von Turbinen (2, 2a, 25, 26, 18), die auf einer Abtriebswelle (39) angeordnet sind und in ihrem Eintrittskanal (34) jeweils ein Einlassventil (3) aufweisen, das dazu eingerichtet ist, Hydraulikflüssigkeit in die Turbine (2, 2a, 25, 26, 18) zu leiten, um diese anzutreiben;
- eine Pumpe (13), die mit der Antriebswelle (14) verbunden und dazu eingerichtet ist, Hydraulikflüssigkeit aus dem Flüssigkeitsbehälter (10) mit einem bestimmten Druck zu den Einlassventilen (3) der Vielzahl von Turbinen (2, 2a, 25, 26, 18) zu fördern
- eine Rücklaufleitung (50), die einen Austrittskanal (31) der Vielzahl von Turbinen (2, 2a, 25, 26, 18) mit dem Flüssigkeitsbehälter (10) verbindet, wobei jede der Vielzahl von Turbinen (2, 2a, 25, 26, 18) über einen Freilauf (27, 37) mit der Abtriebswelle (39) verbindbar ist, und jede der Vielzahl von Turbinen (2, 2a, 25, 26, 18) eine Vielzahl von Turbinenschaufeln (7) aufweist, die beweglich an dem Freilauf (27, 37) befestigt sind.

2. Hydrodynamisches Getriebe nach Anspruch 1, wobei jede der Vielzahl von Turbinen (2, 2a, 25, 26, 18) einen anderen Durchmesser aufweist.

3. Hydrodynamisches Getriebe nach Anspruch 1, wobei die beweglichen Turbinenschaufeln (7) dazu eingerichtet sind, von einer radialen Richtung in eine tangentiale Richtung des Freilaufs (27, 37) bewegt zu werden.

4. Hydrodynamisches Getriebe nach Anspruch 1 oder 3, wobei jede der Vielzahl von Turbinen (2, 2a, 25,26, 18) einen zu der Abtriebswelle (39) konzentrischer Umlaufkanal (12) aufweist, der den Eintrittskanal (34) und den Austrittskanal (31) verbindet, und in dem sich die Turbinenschaufeln (7) in radialer Richtung des Freilaufs (27, 37) erstrecken.

5. Hydrodynamisches Getriebe nach Anspruch 4, wobei jede der Vielzahl von Turbinen (2, 2a, 25,26, 18) einen Sperrbereich (33) aufweist, der zwischen dem Austrittskanal (31) und dem Eintrittskanal (34) angeordnet ist, und in dem sich die Turbinenschaufeln (7s1, 7s2) in tangentialer Richtung des Freilaufs (27, 37) erstrecken.

6. Hydrodynamisches Getriebe nach Anspruch 4 oder 5, wobei der Eintrittskanal (34) dazu eingerichtet ist, die Hydraulikflüssigkeit in tangentialer Richtung zu einem zu der Abtriebswelle (39) konzentrischen Kreis in den Umlaufkanal (12) einzuleiten, und der Austrittskanal (31) dazu eingerichtet ist, die Hydraulikflüssigkeit in tangentialer Richtung zu dem zu der Abtriebswelle (39) konzentrischen Kreis aus dem Umlaufkanal (12) herauszuleiten.

7. Hydrodynamisches Getriebe nach Anspruch 5 und 6, wobei der Umlaufkanal (12) und der Sperrbereich (33) durch eine außermittige Anordnung des Freilaufs (27, 37) in dem Gehäuse (41) gebildet sind.

8. Hydrodynamisches Getriebe nach mindestens einem der vorstehenden Ansprüche, ferner umfassend eine Recheneinheit, die dazu eingerichtet ist, ein benötigtes Drehmoment an der Abtriebswelle (39) zu bestimmen und die Einlassventile (3) der Vielzahl von Turbinen (2, 2a, 25, 26, 18) in Abhängigkeit von dem benötigten Drehmoment zu steuern.

9. Hydrodynamisches Getriebe nach Anspruch 8, wobei die Recheneinheit dazu eingerichtet ist, ein Einlassventil (3) einer der Vielzahl von Turbinen (2, 2a, 25, 26, 18) zu öffnen, wenn das benötigte Drehmoment an der Abtriebswelle (39) größer als eine erste vorbestimmte Drehmomentschwelle ist.

10. Hydrodynamisches Getriebe nach Anspruch 8 oder 9, wobei die Recheneinheit dazu eingerichtet ist, das Rückströmventil (15) zu öffnen, wenn das benötigte Drehmoment an der Abtriebswelle (39) kleiner als eine zweite vorbestimmte Drehmomentschwelle ist.

11. Verfahren zum Betreiben eines hydrodynamischen Getriebes nach einem der vorstehenden Ansprüche umfassend die Schritte
- Bestimmen eines benötigtes Drehmoments an einer Abtriebswelle (39) des hydrodynamischen Getriebes; und
- Steuern von Einlassventilen (3) einer Vielzahl von Turbinen (2, 2a, 25, 26, 18), die auf der Abtriebswelle (39) angeordnet sind, in Abhängigkeit von dem benötigten Drehmoment.

12. Verfahren nach Anspruch 11, ferner umfassend die Schritte
- Öffnen eines Einlassventils (3) einer der Vielzahl von Turbinen (2, 2a, 25, 26, 18), wenn das benötigte Drehmoment an der Abtriebswelle (39) größer als eine erste vorbestimmte Drehmomentschwelle ist; und
- Öffnen eines Rückströmventils (15) in einer Rückströmleitung (5), die einen Ausgang einer Pumpe (13) des hydrodynamischen Getriebes mit einem Flüssigkeitsbehälter (10) verbindet, wenn das benötigte Drehmoment an der Abtriebswelle (39) kleiner als eine zweite vorbestimmte Drehmomentschwelle ist.

13. Verwendung eines hydrodynamischen Getriebes nach mindestens einem der Ansprüche 1 bis 10 in einem Antrieb eines Fahrzeugs, insbesondere eines Motorrads.

14. Fahrzeug, insbesondere ein Motorrad, umfassend ein hydrodynamischen Getriebe nach mindestens einem der Ansprüche 1 bis 10.
